(19) Europäisches Patentamt
European Patent Office
Office européen des brevets

(11) **EP 2 720 188 B1**

(12) **EUROPEAN PATENT SPECIFICATION**

(45) Date of publication and mention
of the grant of the patent:
**01.03.2017 Bulletin 2017/09**

(51) Int Cl.:
*H02J 3/00* (2006.01)          *H02J 3/14* (2006.01)
*G06Q 50/06* (2012.01)          *F24F 11/00* (2006.01)

(21) Application number: **13187787.0**

(22) Date of filing: **08.10.2013**

(54) **System and method for management of backup power devices**

System und Verfahren für die Verwaltung von Notstromversorgungseinrichtungen

Système et procédé permettant de gérer des alimentations de secours

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2012 US 201213647853**

(43) Date of publication of application:
**16.04.2014 Bulletin 2014/16**

(73) Proprietor: **General Electric Company**
**Schenectady, NY 12345 (US)**

(72) Inventors:
• **Losee, Marc Karl**
**Atlanta, GA Georgia 30339-8402 (US)**
• **Meadows, Vernon**
**Atlanta, GA Georgia 30339-8402 (US)**
• **Massey, Jerry Steven**
**Atlanta, GA Georgia 30339-8402 (US)**
• **Arvind, Kamal**
**Atlanta, GA Georgia 30339 (US)**

(74) Representative: **Cleary, Fidelma et al**
**GPO Europe**
**GE International Inc.**
**The Ark**
**201 Talgarth Road**
**Hammersmith**
**London W6 8BJ (GB)**

(56) References cited:
**WO-A2-2011/055975     US-A1- 2011 046 792**
**US-A1- 2012 166 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The subject matter disclosed herein relates to a system and method for managing the charge of backup devices of a facility using advanced metering infrastructure.

A utility system provides power to facilities connected to a power grid. Power grids periodically experience disturbances, such as blackouts or brownouts, which may be caused by inclement weather or overloading of the power system. Accordingly, many consumers and facilities have backup devices to provide power during these disturbances. However, consumers are often unaware of an upcoming disturbance or the duration of the disturbance. As such, some consumers may be unprepared for the disturbance and may not have a sufficient charge stored in their backup devices. To prevent such an inconvenience, some consumers may keep their backup devices fully charged at all times. However, this increases their utility bill and may also reduce the life of the backup devices.

US 2012/166004 describes an energy management system in a home network interworking with a smart grid. The system includes a power management apparatus for managing power consumption of a power consumption apparatus, a power storage apparatus for storing or supplying power to the power consumption apparatus, a power production apparatus for transmitting status information of its power production to the power management apparatus, a mobile power storage/supply apparatus for transmitting its power status to the power management apparatus, a smart meter for transmitting a real-time price and demand response information to the power management apparatus and a wireless terminal for inputting a schedule of a home power consumer.

## BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

The present invention resides in a smart meter electronics device as defined in the appended claims.

## BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is a block diagram of a utility communication system that includes a backup management system, in accordance with an embodiment; and

FIG. 2 illustrates a flowchart of an embodiment of a method for managing backup devices of a facility using the backup management system of FIG. 1.

## DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The disclosed embodiments relate to a utility communication system with a backup management system configured to manage backup devices of a facility in accordance with a consumer's preferences. As previously discussed, many consumers have backup devices to power their facilities in the event of a power disturbance, such as a blackout or brownout. However, the consumer may not have prior information relating the power disturbance, such as occurrence or duration, to allow for efficient management of the backup devices. As such, the disclosed embodiments provide a utility communication system with a backup management system, which may receive consumer preferences relating to their backup devices and use the consumer preferences to determine customized charging and switching schedules for the backup devices. In certain embodiments, a consumer may input preferences to the backup management system once, and the backup management system may automatically manage the backup devices of the consumer according to the received consumer preferences. In other embodiments, a consumer may override the previously submitted preferences and input new preferences. As such, the backup management system may determine new charging and switching schedules for the backup devices.

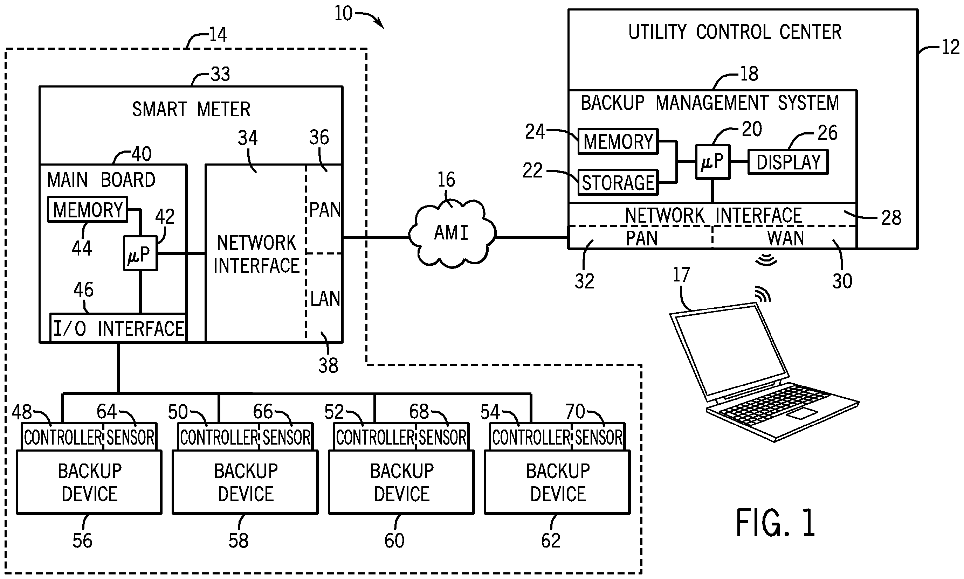

With the foregoing in mind, FIG. 1 illustrates a block diagram of an embodiment of a utility communication system 10 including a utility control center 12 (e.g., in a power generation system), which may communicate with a consumer facility 14 via an automated metering infrastructure (AMI) 16. The utility control center 12 may also wirelessly communicate with a laptop 17 of the consumer via a backup management system (BMS) 18. The utility communication system 10 may be used in conjunction with a smart grid system, which includes power generation systems, power transmission and distribution systems, metering systems, digital communication systems, control systems, and their related components. The smart grid system enables the utility communication system 10 to improve capacity, improve energy distribution and usage, and to dynamically manage loads more effectively. The utility control center 12 may provide oversight operations of the smart grid system, such as monitoring and directing power produced by one or more power generation stations.

As illustrated, the utility control center 12 includes the BMS 18. The BMS 18 may include processors 20 and/or other data processing circuitry that may be operably coupled to storage 22 and memory 24 to execute instructions for carrying out the presently disclosed techniques. These instructions may be encoded in programs that may be executed by the processors 20. The instructions may be stored in any suitable article of manufacturer that includes at least one tangible non-transitory, computer-readable medium that at least collectively stores these instructions or routines, such as the storage 22 or the memory 24.

The storage 22 and the memory 24 of the BMS 18 may include, for example, random-access memory, read-only memory, rewritable memory, hard drive(s), and/or optical discs. In one embodiment, the BMS 18 may include a display 26, for displaying, for example, a graphical user interface (GUI) and/or data related to communications. The BMS 18 may also include a network interface 28. The network interface may provide communication via a wide area network (WAN) 30 (e.g., the Internet), a personal area network (PAN) 32, a local area network (LAN) (e.g., Wi-Fi), a physical connection (e.g., an Ethernet connection), and/or the like.

The BMS 18 may receive consumer preferences regarding the management of the consumer's backup devices from a laptop 17 through WAN 30. It should be appreciated that laptop 17 may be any suitable device capable of transmitting the consumer preferences over the internet. Specifically, the consumer may input information for the management of owned backup devices, such as the number and type of useful backup devices, the loads the backup devices need to support during a power disturbance (e.g., blackout or brownout), the priority of the loads, a minimum amount of charge the consumer requires, as well as additional charge desired if the price is under a set price point. For example, a consumer may have four backup devices, but may only require two of the devices fully charged at all times to support the required loads. As the consumer requires this minimum amount of charge, the consumer may elect to charge the two devices at any price point. However, the consumer may set additional charge points at corresponding price points. For instance, the consumer may select to charge the third device to half of the maximum charge at one price point or fully charge the third device at a second lower price point. It should further be appreciated that a consumer may not select a minimum amount of required charge, but a maximum price point instead. As such, the consumer may elect to forgo charging the backup devices if the price is too high. The BMS 18 may store the consumer preferences in storage 22 or memory 24. The BMS 18 may generate customized schedules for charging the backup devices of the consumer based on the stored consumer preferences. For example, the processor 20 may execute code stored in memory 24 for generating the customized schedules.

Customized schedules (e.g., obtaining a higher charge at a lower price) for charging the backup devices may be generated using information received from the AMI 16. The AMI 16 may be used to measure, collect, and analyze electricity usage, thereby providing a link between consumer behavior and utility consumption. The utility's consumers may benefit from lower utility charges by optimizing their utility use, for example, to take advantage of lower rates during low demand hours. Accordingly, flexible power consumption devices may be programmed to operate during low demand hours, resulting in lower utility bills and a more balanced utilization of energy. Similarly, flexible charging schedules may be programmed to charge backup devices during low demand hours. To facilitate the information transfer, the BMS 18 may be communicatively coupled to the AMI 16 via PAN 32. The AMI 16 may additionally be communicatively coupled with a smart meter 33 at the consumer facility 14 via a network interface 34, and specifically, a PAN 36. As such, two-way communication may occur between the BMS 18 and the smart meter 33.

As described above, the smart meter 33 may include a network interface 34 with PAN 32, as well as a local area network (LAN) 38 for wirelessly communicating with devices at the consumer facility 14. The smart meter 33 may include a main board 40. The main board 40 may include processors 42 and/or other data processing circuitry that may be operably coupled to memory 44 to execute instructions for carrying out the presently disclosed techniques. Moreover, these instructions may be encoded in programs that may be executed by the processors 42. The instructions may be stored in any suitable article of manufacturer that includes at least one tangible non-transitory, computer-readable medium that at least collectively stores these instructions or routines, such as the memory 44. The memory 44 may include, for example, random-access memory, read-only memory, rewritable memory, hard drive(s), and/or optical discs.

The main board 40 may also include an input/output (I/O) interface 46, which may be operably coupled to controllers 48, 50, 52, and 54 of backup devices 56, 58, 60, and 62. The backup devices 56, 58, 60, and 62 may be any suitable backup device such as a backup battery or uninterruptable power source (UPS). The main board 40 may send a signal through I/O interface 46 to one or more controllers to activate the corresponding backup device(s). The controllers 48, 50, 52, and 54 may include sensor portions 64, 66, 68, and 70. The sensor portions 64, 66, 68, and 70 may, for example, be integrated into the backup devices 56, 58, 60, and 62, respectively. Alternatively, the sensor portions 64, 66, 68, and 70 may be independent from and electrically coupled to the backup devices 56, 58, 60, and 62. The sensor portions 64, 66, 68, and 70 may, for example, be configured to read the charge of the respective backup device 56, 58, 60, and 62, and may also include a transmitter for communicating with the smart meter 33 via LAN 38. As such, the backup devices 56, 58, 60, and 62 may communicate with the smart meter 33 via LAN 38 or directly via I/O interface 46.

As described above, the BMS 18, using PAN 32, may be configured to read the charge of each backup device 56, 58, 60, and 62 from the smart meter 33 at the consumer facility 14 via communication with the AMI 16. The BMS 18, via the processor 20, may use the charge information in conjunction with the received consumer preferences to automatically determine customized charging and switching schedules for the backup devices 56, 58, 60, and 62. Accordingly, the disclosed embodiments also provide a method for managing the backup devices 56, 58, 60, and 62 using the BMS 18.

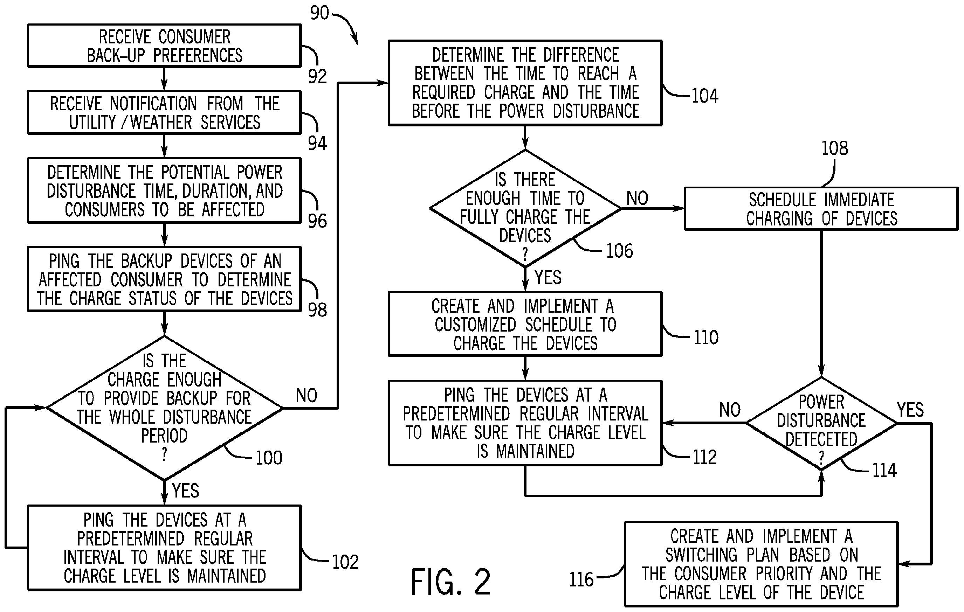

FIG. 2 illustrates a flowchart of a method 90 for managing consumers' backup devices (e.g., 56, 58, 60, and 62) using the BMS 18 of FIG. 1. At block 92, the BMS 18 receives consumer backup preferences via the network interface 28. As previously described, the consumer may input information for the management of owned backup devices 56, 58, 60, and 62, such as the number and type of useful backup devices 56, 58, 60, and 62, the loads the backup devices 56, 58, 60, and 62 need to support during a power disturbance (e.g., blackout or brownout), the priority of the loads, a minimum amount of charge the consumer requires, as well as additional charge desired if the price is under a set price point. Specifically, the BMS 18 may receive the consumer preference information via WAN 30. It should be appreciated that the consumers may update their preferences at any time, and these preferences may override, restart, or alter the method 90.

At block 94, the BMS 18 may receive a notification about a potential power disturbance from the utility control center 12 or weather services, such as the geographic information system (GIS). For example, the utility control center 12 may determine that the smart grid system is overloaded and send a notification to the BMS 18 that a blackout or brownout is highly probable. The utility control center 12 may receive a notification about a planned brownout. Additionally or alternatively, the weather services may detect upcoming severe weather and alert the BMS 18 of a predicted unscheduled power disturbance.

After receiving a notification about a potential disturbance, the BMS 18 communicates with the utility control system 12 and the GIS to determine the likely occurrence and duration of the potential power disturbance, as well as the consumers to be affected (block 96). Next, at block 98, the BMS 18 pings the backup devices 56, 58, 60, and 62 of an affected consumer to determine the charge status of each backup device. For example, the BMS 18 sends a signal to the smart meter 33 at a consumer facility 14 through the AMI 16. The smart meter 33 reads the charges measured by sensors 64, 66, 68, and 70 of the backup devices 56, 58, 60, and 62, and sends the charge status for each device back to the BMS 18 through AMI 16.

At block 100, the BMS 18 determines if the total charge is enough to provide backup for the whole power disturbance period. Accordingly, the processor 20 of the BMS 18 accesses the consumer preferences stored in storage 22 or memory 24, and may execute computer-readable code containing instructions for analyzing the preferences and generating customized schedules for charging the backup devices 56, 58, 60, and 62 based on the preferences. In certain embodiments, the processor 20 may analyze the preferences using various algorithms, which may also be stored in storage 22 or memory 24. For example, the BMS 18 may determine the total charge required (Cr) to support the consumer's selected loads for the disturbance period, based on the rates of power consumption of the loads, and the total available charge (Cc). Next, the BMS 18 may calculate the charge needed (Cn) to reach Cr. This may be determined using the equation:

$$Cn = Cc - Cr$$

When Cn is greater than zero, the available charge of the backup devices is sufficient to support the consumer's loads. When Cn is less than zero, the available charge is not sufficient, and the backup devices will require charging in order to better support the consumer's loads. The equation above may be used to generate charging notifications by the processor 20 of the BMS 18. These charging notifications may include signals that instruct the smart meter 33 to implement a charging program for the backup devices 56, 58, 60, and 62.

If the available charge is sufficient for the disturbance period, the BMS 18 may ping the backup devices 56, 58, 60, and 62, as described above, at predetermined regular intervals until the disturbance occurs to ensure that the charge levels are maintained, such that the consumer's loads may be supported during the entire power disturbance period (block 102). If the available charge falls below Cr, the BMS 18 may send a signal, such as a charging notification, via PAN 32 to the smart meter 33 indicating that one or more backup devices should be charged. Accordingly, the smart meter 33 may then send a signal, based on the received charging notification, to the one or more indicated backup devices instructing the respective backup devices to draw power from the smart grid system. This signal from the smart meter 33 may be, for example, part of an overall charging program for the backup devices.

However, if Cn is less than zero, the processor 20 of the BMS 18 may determine the difference between the time required to reach Cr and the time before the disturbance (block 104). The BMS 18 may communicate with the smart meter 33, via AMI 16, to receive information relating to rates of charging and discharging of the backup devices 56, 58, 60, and 62, and may incorporate the information into various algorithms for the determination of the time required to reach Cr. These algorithms may be utilized to generate the charging notification for directing the charging of the backup devices 56, 58, 60, and 62. As such, the BMS 18 determines if there is enough time to fully charge the devices to the required level, Cr, before the disturbance (block 106).

As previously described, the consumer may set various levels of charge desired based on, for example, the price of the energy. In certain embodiments, a consumer may set an absolute minimum Cr and may be willing to pay any price to receive a charge level. However, in other embodiments, a consumer may set an absolute maximum price point or a total cost limit, such that the backup devices 56, 58, 60, and 62 may receive no charge, if the price point is too high, or may receive a partial charge, if the total cost limit is reached. Accordingly, the processor 20 of the BMS 18 considers the current price point and the consumer preferences to determine if the backup devices 56, 58, 60, and 62 should be charged. In circumstances where the time is insufficient to fully charge the backup devices 56, 58, 60, and 62 and the consumer is willing to pay to charge the backup devices 56, 58, 60, and 62 to whatever level is possible, the processor 20 may schedule for immediate charging of the backup devices 56, 58, 60, and 62 (block 108). Accordingly, as described above, the BMS 18 may send a signal (e.g., a charging notification) to the smart meter 33 indicating that the backup devices 56, 58, 60 and 62 should draw power from the smart grid system. Additionally, the BMS 18 may schedule for constant charging until the total cost limit is reached, or until the power disturbance occurs.

Alternatively, if the time before the power disturbance is sufficient to fully charge the devices, the processor 20 may create and implement a customized schedule to charge the devices (block 110). The processor 20 uses the consumer preferences regarding levels of charge desired and willingness to pay to generate the customized schedule. For example, a consumer may have four backup devices (e.g., 56, 58, 60, and 62), but may only require two of the devices (e.g., 56 and 58) fully charged at all times to support the required loads. As the consumer requires this charge, the consumer elects to charge the two devices at any price point. For example, the consumer facility 14 may be a hospital or other facility providing medical support to patients. The consumer facility 14 may include high priority loads, for example, (e.g., life supporting medical devices) which require power for the duration of the power disturbance. Accordingly, these high priority loads may, for example, be supported by the backup devices 56 and 58. However, the consumer may set additional charge points at corresponding price points. Additionally, the consumer may select to charge the third backup device (e.g., 60) to half of the maximum charge at one price point or fully charge the third backup device (e.g., 60) at a second lower price point. These preferences may be related to lower priority loads (e.g., air conditioning units) that the consumer would like to support during the disturbance period. As will be appreciated, the backup devices 56, 58, 60, and 62 may be designated for specific loads, which may have different priority levels.

The BMS 18 may also communicate with the utility control center 12 to determine when lower utility prices may occur during the day (e.g., lower demand hours) and may schedule charging to take advantage of the lower rates. The processor 20 of the BMS 18 may develop a customized schedule in which charging occurs in one period or over several periods until the power disturbance. Once the devices have been charged to the consumer's desired levels, the BMS 18 may ping the devices at predetermined regular intervals, as previously described, until the power disturbance is detected, to make sure the charge levels are maintained (block 112). As previously discussed, if the available charge falls below the desired level and the price is within a set range, or the available charge falls below the required level, the BMS 18 may direct the smart meter 33 to send a signal to one or more of the backup devices 56, 58, 60, and 62 to draw power from the smart grid system. This process by the BMS 18 may also constitute a charging notification.

At block 114, the BMS 18 detects the power disturbance. In certain embodiments, the BMS 18 may receive a signal from the utility control center 12 or the weather services indicating the start of the power disturbance. Once the power disturbance is detected, the BMS 18 may create and implement, via the processor 20, a switching plan for the loads listed by the consumer (block 116). The switching plan may be based on the priority of the loads, as set by the consumer, the rate of power consumed by the loads, the duration of the power disturbance, and the available charge of the devices. For example, if available charge is only sufficient to support three high rated loads, then the remainder of the loads will be disconnected from the backup devices.

As described in detail above, the disclosed embodiments relate to a system and method for managing the backup devices of a consumer during power disturbances in accordance with the consumer's preferences. Specifically, the consumer may input preferences to the backup managements system (BMS) 18 of the utility communication system 10. The BMS 18, via the processor 20, may use the received preferences (e.g., the number of backup devices to be charged, the desired level of charge for each device, and the priority of the backup devices) and may additionally communicate, via PAN 30, with the smart meter 33 (e.g., to receive the charge levels of the backup devices) at the consumer facility 14 to automatically create and implement charging and switching schedules for the backup devices. As such, the disclosed embodiments may reduce or minimize the inconvenience of a power disturbance at the consumer facility 14.

This written description uses examples to disclose the invention, including the best mode, and also to allow any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A smart meter electronics device (33), comprising:

   a network interface (34) configured to receive one or more preferences of a consumer related to the charging of at least one backup power device (56) of the consumer; and
   a processor (42) configured to utilize the one or more consumer preferences,

   generate a charging schedule of the at least one backup power device, based in part on the consumer preferences and at least one predicted power disturbance, and
   generate, based on said charging schedule, one or more charging notifications for charging the at least one backup power device.

2. The smart meter electronics device of claim 1, wherein the network interface (34) is configured to transmit the one or more charging notifications to a facility of the consumer, wherein the facility comprises the at least one backup power device (56).

3. The smart meter electronics device of claim 1 or claim 2, wherein the network interface (34) is configured to transmit the one or more charging notifications via an advanced metering infrastructure (16) connecting the device to the facility.

4. The smart meter electronics device of any preceding claim, wherein the one or more preferences relate to price of electricity.

5. The smart meter electronics device of any preceding claim, wherein the one or more preferences relate to a preferred amount of charge for the at least one backup power device (56).

6. The smart meter electronics device of any preceding claim, wherein the at least one predicted power disturbance comprises a scheduled interruption of electricity to a facility of the consumer, wherein the facility comprises the at least one backup power device (56).

7. The smart meter electronics device of any preceding claim, wherein the at least one predicted power disturbance comprises an unscheduled interruption of electricity to the facility.

8. The smart meter electronics device of any preceding claim, wherein the processor (42) is configured to generate the charging schedule based in part on a current charge status of the at least one backup power device (56).

9. The smart meter electronics device of any preceding claim, wherein the processor (42) is configured to generate a switching plan configured to control the at least one or more backup power device (56) subsequent to the at least one predicted power disturbance.

10. The smart meter electronics device of any preceding claim, wherein the network interface (34) is configured to transmit the switching plan to the facility.

11. A non-transitory computer-readable medium having computer executable code stored thereon, the code comprising instructions for:

   receiving one or more preferences of a consumer related to the charging of at least one backup power device (56) of the consumer;
   generating a charging schedule of the at least one backup power device (56), based in part on the consumer preferences and at least one predicted power disturbance, and
   generating, based on said charging schedule, one or more charging notifications for charging the at least one backup power device (56).

**Patentansprüche**

1.  Smart-Meter-Elektronikvorrichtung (33), umfassend:

    eine Netzwerkschnittstelle (34), die konfiguriert ist, eine oder mehrere Präferenzen eines Verbrauchers im Zusammenhang mit dem Aufladen der mindestens einen Notstromvorrichtung (56) des Verbrauchers zu empfangen; und
    einen Prozessor (42), der konfiguriert ist, die eine oder mehreren Verbraucherpräferenzen zu nutzen,

    einen Aufladezeitplan der mindestens einen Notstromvorrichtung, teilweise basierend auf den Benutzerpräferenzen und mindestens einer vorhergesagten Leistungsstörung, zu erzeugen und basierend auf dem Aufladezeitplan eine oder mehrere Aufladebenachrichtigungen zum Aufladen der mindestens einen Notstromvorrichtung zu erzeugen.

2.  Smart-Meter-Elektronikvorrichtung nach Anspruch 1, wobei die Netzwerkschnittstelle (34) konfiguriert ist, die eine oder mehreren Aufladebenachrichtigungen an eine Einrichtung des Verbrauchers zu übertragen, wobei die Einrichtung die mindestens eine Notstromvorrichtung (56) umfasst.

3.  Smart-Meter-Elektronikvorrichtung nach Anspruch 1 oder Anspruch 2, wobei die Netzwerkschnittstelle (34) konfiguriert ist, die eine oder mehreren Aufladebenachrichtigungen über eine fortschrittliche Messinfrastruktur (16) zu übertragen, die die Vorrichtung mit der Einrichtung verbindet.

4.  Smart-Meter-Elektronikvorrichtung nach einem der vorhergehenden Ansprüche, wobei die eine oder mehrere Präferenzen den Strompreis betreffen.

5.  Smart-Meter-Elektronikvorrichtung nach einem der vorhergehenden Ansprüche, wobei die eine oder mehreren Präferenzen eine vorbestimmte Ladungsmenge für die mindestens eine Notstromvorrichtung (56) betreffen.

6.  Smart-Meter-Elektronikvorrichtung nach einem der vorhergehenden Ansprüche, wobei die mindestens eine vorhergesagte Leistungsstörung eine geplante Unterbrechung von Strom an eine Einrichtung des Verbrauchers umfasst, wobei die Einrichtung mindestens eine Notstromvorrichtung (56) umfasst.

7.  Smart-Meter-Elektronikvorrichtung nach einem der vorhergehenden Ansprüche, wobei die mindestens eine vorhergesagte Leistungsstörung eine nichtgeplante Unterbrechung von Strom an die Einrichtung umfasst.

8.  Smart-Meter-Elektronikvorrichtung nach einem der vorhergehenden Ansprüche, wobei der Prozessor (42) konfiguriert ist, den Aufladezeitplan teilweise basierend auf einem aktuellen Ladezustand der mindestens einen Notstromvorrichtung (56) zu erzeugen.

9.  Smart-Meter-Elektronikvorrichtung nach einem der vorhergehenden Ansprüche, wobei der Prozessor (42) konfiguriert ist, einen Schaltplan zu erzeugen, der konfiguriert ist, die mindestens eine oder mehreren Notstromvorrichtungen (56) im Anschluss an die mindestens eine vorhergesagte Leistungsstörung zu steuern.

10. Smart-Meter-Elektronikvorrichtung nach einem der vorhergehenden Ansprüche, wobei die Netzwerkschnittstelle (34) konfiguriert ist, den Schaltplan an die Einrichtung zu übertragen.

11. Nichtflüchtiges computerlesbares Medium, das einen darauf gespeicherten computerausführbaren Code aufweist, wobei der Code Anweisungen für Folgendes umfasst:

    Empfangen einer oder mehrerer Präferenzen eines Verbrauchers im Zusammenhang mit dem Aufladen der mindestens einen Notstromvorrichtung (56) des Verbrauchers;
    Erzeugen eines Aufladezeitplans der mindestens einen Notstromvorrichtung (56) teilweise basierend auf den Verbraucherpräferenzen und mindestens einer vorhergesagten Leistungsstörung, und
    Erzeugen, basierend auf dem Aufladezeitplan, einer oder mehrerer Aufladebenachrichtigungen zum Aufladen der mindestens einen Notstromvorrichtung (56).

**Revendications**

1.  Dispositif électronique de comptage intelligent (33), comprenant :

    une interface de réseau (34) configurée pour recevoir une ou plusieurs préférences d'un consommateur en rapport avec le chargement d'au moins un dispositif électrique de secours (56) du consommateur ; et
    un processeur (42) configuré pour utiliser les une ou plusieurs préférences du consommateur,

    générer un programme de chargement du au moins un dispositif électrique de secours sur la base en partie des préférences du consommateur et d'au moins une perturbation électrique prédite et générer sur la base dudit programme de chargement une ou plusieurs notifications de chargement pour charger le au moins un dispositif électrique de secours.

2. Dispositif électronique de comptage intelligent selon la revendication 1, dans lequel l'interface de réseau (34) est configurée pour transmettre les une ou plusieurs notifications de chargement à une installation du consommateur, dans lequel l'installation comprend le au moins un dispositif électrique de secours (56).

3. Dispositif électronique de comptage intelligent selon la revendication 1 ou la revendication 2, dans lequel l'interface de réseau (34) est configurée pour transmettre les une ou plusieurs notifications de chargement via une infrastructure de comptage évoluée (16) connectant le dispositif à l'installation.

4. Dispositif électronique de comptage intelligent selon l'une quelconque des revendications précédentes, dans lequel les une ou plusieurs préférences se réfèrent au prix de l'électricité.

5. Dispositif électronique de comptage intelligent selon l'une quelconque des revendications précédentes, dans lequel les une ou plusieurs préférences se réfèrent à une quantité préférée de charge pour le au moins un dispositif électrique de secours (56).

6. Dispositif électronique de comptage intelligent selon l'une quelconque des revendications précédentes, dans lequel la au moins une perturbation électrique prédite comprend une interruption programmée de l'électricité à une installation du consommateur, dans lequel l'installation comprend le au moins un dispositif électrique de secours (56).

7. Dispositif électronique de comptage intelligent selon l'une quelconque des revendications précédentes, dans lequel la au moins une perturbation électrique prédite comprend une interruption non programmée de l'électricité à l'installation.

8. Dispositif électronique de comptage intelligent selon l'une quelconque des revendications précédentes, dans lequel le processeur (42) est configuré pour générer le programme de chargement sur la base en partie d'un état de charge de courant du au moins un dispositif électrique de secours (56).

9. Dispositif électronique de comptage intelligent selon l'une quelconque des revendications précédentes, dans lequel le processeur (42) est configuré pour générer un plan de commutation configuré pour commander le au moins un dispositif électrique de secours (56) à la suite de la au moins une perturbation électrique prédite.

10. Dispositif électronique de comptage intelligent selon l'une quelconque des revendications précédentes, dans lequel l'interface de réseau (34) est configurée pour transmettre le plan de commutation à l'installation.

11. Support non transitoire lisible par ordinateur ayant un code exécutable par ordinateur qui y est stocké, le code comprenant des instructions pour :

   recevoir une ou plusieurs préférences d'un consommateur en rapport avec le chargement d'au moins un dispositif électrique de secours (56) du consommateur ;
   générer un programme de chargement du au moins un dispositif électrique de secours (56) sur la base en partie des préférences du consommateur et d'au moins une perturbation électrique prédite et
   générer sur la base dudit programme de chargement une ou plusieurs notifications de chargement pour charger le au moins un dispositif électrique de secours (56).

FIG. 1

```
                                                    ┌─────────────────────────┐
┌─────────────────────────┐                         │ DETERMINE THE DIFFERENCE│
│    RECEIVE CONSUMER      │         90              │ BETWEEN THE TIME TO     │
│    BACK-UP PREFERENCES   │                         │ REACH A REQUIRED CHARGE │──104
└─────────────────────────┘         92              │ AND THE TIME BEFORE THE │
            │                                        │ POWER DISTURBANCE       │
            ▼                                        └─────────────────────────┘
┌─────────────────────────┐                                      │
│ RECEIVE NOTIFICATION FROM│                                      ▼
│ THE UTILITY/WEATHER      │         94                                          108
│ SERVICES                 │                                                      │
└─────────────────────────┘                                                      
```

RECEIVE CONSUMER BACK-UP PREFERENCES — 90 — 92

RECEIVE NOTIFICATION FROM THE UTILITY/WEATHER SERVICES — 94

DETERMINE THE POTENTIAL POWER DISTURBANCE TIME, DURATION, AND CONSUMERS TO BE AFFECTED — 96

PING THE BACKUP DEVICES OF AN AFFECTED CONSUMER TO DETERMINE THE CHARGE STATUS OF THE DEVICES — 98

IS THE CHARGE ENOUGH TO PROVIDE BACKUP FOR THE WHOLE DISTURBANCE PERIOD ? — 100

NO

YES

PING THE DEVICES AT A PREDETERMINED REGULAR INTERVAL TO MAKE SURE THE CHARGE LEVEL IS MAINTAINED — 102

DETERMINE THE DIFFERENCE BETWEEN THE TIME TO REACH A REQUIRED CHARGE AND THE TIME BEFORE THE POWER DISTURBANCE — 104

IS THERE ENOUGH TIME TO FULLY CHARGE THE DEVICES ? — 106

NO

SCHEDULE IMMEDIATE CHARGING OF DEVICES — 108

YES

CREATE AND IMPLEMENT A CUSTOMIZED SCHEDULE TO CHARGE THE DEVICES — 110

PING THE DEVICES AT A PREDETERMINED REGULAR INTERVAL TO MAKE SURE THE CHARGE LEVEL IS MAINTAINED — 112

POWER DISTURBANCE DETECETED ? — 114

NO

YES

CREATE AND IMPLEMENT A SWITCHING PLAN BASED ON THE CONSUMER PRIORITY AND THE CHARGE LEVEL OF THE DEVICE — 116

FIG. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   US 2012166004 A